# EUROPÄISCHE PATENTANMELDUNG

(11) **EP 0 825 373 A2**
(43) Veröffentlichungstag der Anmeldung: **25.02.1998**
(21) Anmeldenummer: 97110915.2
(22) Anmeldetag: 02.07.1997
(51) Int. Cl.: F16L 13/14

(54) **Anschlussgarnitur**

(30) Priorität: 16.08.1996 DE 29614220 U
(71) Anmelder: Schmetz, Wolfgang, 59457 Werl (DE)
(72) Erfinder: Schmetz, Wolfgang, 59457 Werl (DE)
(74) Vertreter: Dörner, Lothar, Dipl.-Ing.

(57) **Zusammenfassung**

Die Anschlußgarnitur ist für Heizkörper und für die Verwendung im Sockelleistenbereich bestimmt. Sie besteht aus einem Rohr (1) und einer mit dem Rohr verbundenen Muffe (2). Die Verbindung ist aus einer berührungslosen Verformung des Rohres (1) und/oder der Muffe (2) gebildet.

## Beschreibung

Die Erfindung betrifft eine aus einem Rohr und einer mit dem Rohr verbundenen Muffe bestehende Anschlußgarnitur für Heizkörper und für die Verwendung im Sockelleistenbereich.

In einer Heizungsanlage bilden Heizkörperanschlußgarnituren den Übergang von nach dem Heizkörper führenden/vom Heizkörper kommenden Rohren zu im Mauerwerk oder Boden verlegten Leitungen eines Warmwasserkreislaufs innerhalb eines Gebäudes. Die hier ebenfalls betrachteten Anschlüsse im Sockelleistenbereich finden Anwendung, wenn Leitungen des Warmwasserkreislaufs hinter Sockelleisten in Bodennähe entlang der Zimmerwände verlegt sind. Für beide Verwendungen steht der Begriff Anschlußgarnitur.

Es ist bekannt, bei Anschlußgarnituren der hier betrachteten Art die Verbindung zwischen Rohr und Muffe durch Löten herzustellen. Dabei kommt ein Lot zum Einsatz, dessen Schmelztemperatur unterhalb der Schmelztemperaturen der Werkstoffe liegt, aus denen das Rohr und die Muffe hergestellt sind. Die Verbindung entsteht durch Legierungsbildung oder durch Diffusion zwischen den verwendeten Werkstoffen und dem Lot. Bei Werkstücken, die an der Luft gelötet werden, wird ein Flußmittel zur Vermeidung von Oxydationen im Bereich der Lötung benötigt. Aus Korrosionsgründen ist es erforderlich, das Flußmittel anschließend zu entfernen, z.B. zu beizen. Diese Art der Lötverbindung von Rohr und Muffe weist den Nachteil auf, daß durch das Einbringen von Wärmeenergie Verspannungen und Anlauffarben entstehen. Darüber hinaus sind Verbindungen unterschiedlicher Materialien, z.B. Aluminium mit Edelstahl oder Kupfer mit Aluminium, kaum oder gar nicht möglich. Die Verwendung von mit Kunststoff beschichteten Rohren ist ausgeschlossen, da die Beschichtung aus Kunststoff bei den hohen Löttemperaturen beschädigt wird. Des weiteren ist eine Oberflächenbehandlung der Garnituren erst nach dem Löten möglich, was insbesondere bei den Muffen zu Toleranzproblemen führt.

Hier will die Erfindung Abhilfe schaffen. Der Erfindung liegt die Aufgabe zugrunde, eine Anschlußgarnitur zu schaffen, bei deren Herstellung es keiner Wärmebehandlung bedarf und demzufolge auch die Verwendung kunststoffbeschichteter Rohre möglich ist. Gemäß der Erfindung wird diese Aufgabe dadurch gelöst, daß die Verbindung aus einer berührungslosen Verformung des Rohres und/oder der Muffe gebildet ist.

Mit der Erfindung ist eine Anschlußgarnitur geschaffen, die auch den Einsatz von kunststoffbeschichteten Rohren ermöglicht, da keine Wärmebehandlung erforderlich ist. Die Muffen können sogar aus nichmetallischen Werkstoffen, wie z.B. Kunststoff, bestehen. Zudem entstehen keine giftigen Dämpfe oder Ausgasungen im Fertigungsprozeß, wodurch die Herstellung umweltverträglich ist. Es wird Energie gespart, da die Werkstücke nicht erwärmt werden. Darüber hinaus ermöglicht die Garnitur eine Oberflächenbehandlung der Rohre vor dem Verbinden von Rohr und Muffe, wodurch keine Toleranzprobleme im Bereich der Muffen auftreten. Es ist weiterhin eine größere Anzahl an Werkstoffkombinationen von Rohren und Muffen möglich. Außerdem sind die Herstellkosten deutlich verringert.

Die berührungslose Verformung erfolgt vorteilhaft mit Hilfe von Magnet-Impuls-Geräten. Im Automobilbau wird versucht, zur Herstellung von Bremsleitungen oder Leitungen im Bereich von Airbags mit Hilfe solcher Geräte Rohre aus Aluminium miteinander bzw. mit Fittings berührungslos zu verbinden. Diese Rohre aus Aluminium und ihre Verbindung sind im Heizungsbau auf Grund der Korrosion des Aluminiums in Verbindung mit dem im Heizungskreislauf verwendeten Wasser nicht einsetzbar.

Ausgestaltungen und Weiterbildungen der Erfindung sind in den Unteransprüchen beschrieben. Ausführungsbeispiele der Erfindung sind in der Zeichnung dargestellt und wird im folgenden näher beschrieben. Es zeigen:
- Figur 1: eine Verbindung eines Rohres mit einer Muffe;
- Figur 2: eine Verbindung eines Rohres mit zwei Muffen mittels einer Manschette;
- Figur 3: eine Verbindung eines Rohres mit einer Muffe unterschiedlichen Außendurchmessers mit Hilfe einer Manschette.

Die als Ausführungsbeispiele gewählten Anschlußgarnituren bestehen aus einem Rohr 1 und einer Muffe 2. Die Muffe 2 kann dabei unterschiedliche Formen aufweisen. Wie in den Ausführungsbeispielen können Ein- und Austrittsöffnung der Muffe koaxial zueinander und zu dem Rohr angeordnet sein. Jedoch kommen auch abgewinkelte Ausführungen zum Einsatz, beispielsweise mit einer rechtwinkligen Anordnung von Ein- und Austrittsöffnung oder ein T-Stück.

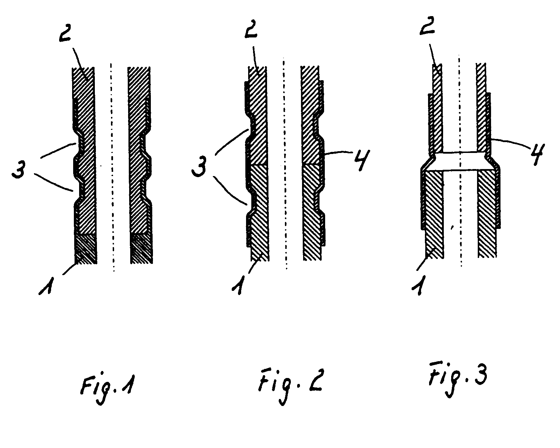

Bei dem Ausführungsbeispiel nach Figur 1 umfaßt ein Teil des Rohres 1 das dem Rohr 1 zugewandte Ende der Muffe 2. Die druckfeste Verbindung zwischen Rohr 1 und Muffe 2 ist mit Hilfe eines berührungslos arbeitenden magnetischen Verfahrens hergestellt. Dabei wird der die Muffe 2 umfassende Teil des Rohres 1 in einem Magnetfeld durch das Zusammenwirken des Magnetfeldes mit einem in dem Rohr 1 induzierten Strom verformt. Die Kraft, die die Verformung hervorruft, ist proportional dem Produkt aus dem Magnetfeld und dem induzierten Strom. Der die Muffe 2 umfassende Bereich des Rohres 1 wird dabei "zusammengequetscht". Dadurch entstehen an der Außenseite des die Muffe 2 umfassenden Bereichs des Rohres 1 Vertiefungen 3. Es entsteht eine formschlüssige und druckfeste Verbindung von Rohr 1 und Muffe 2.

Neben der Möglichkeit, Rohr 1 und Muffe 2 sich in einem bestimmten Bereich überlappen zu lassen, besteht die Möglichkeit, die stirnseitigen Enden des Rohres 1 und der Muffe 2 sich berühren und beide von einer Manschette 4 umfassen zulassen - Figuren 2 und 3 -. Das Herstellen dieser Art der Verbindung von Rohr 1 und Muffe 2 erfolgt auf die gleiche Weise wie die Herstellung nach dem Ausführungsbeispiel in Figur 1.

## Patentansprüche

1. Aus einem Rohr und einer mit dem Rohr verbundenen Muffe bestehende Anschlußgarnitur für Heizkörper und für die Verwendung im Sockelleistenbereich, dadurch gekennzeichnet, daß die Verbindung aus einer berührungslosen Verformung des Rohres (1) und/oder der Muffe (2) gebildet ist.

2. Anschlußgarnitur nach Anspruch 1, dadurch gekennzeichnet, daß das Rohr (1) und die Muffe (2) im Bereich ihrer Verbindung Vertiefungen (3) aufweisen.

3. Anschlußgarnitur nach Anspruch 1 oder 2, dadurch gekennzeichnet, daß das Rohr (1) und die Muffe (2) im Bereich ihrer Verbindung mit einer Manschette (4) umgeben sind.

4. Anschlußgarnitur nach einem der Ansprüche 1 bis 3, dadurch gekennzeichnet, daß das Rohr (1) aus Kupfer oder anderen gut stromleitenden Werkstoffen besteht.

5. Anschlußgarnitur nach einem der Ansprüche 1 bis 4, dadurch gekennzeichnet, daß das Rohr (1) beschichtet ist.

6. Anschlußgarnitur nach einem der Ansprüche 1 bis 5, dadurch gekennzeichnet, daß die Muffe (2) aus metallischen Werkstoffen besteht.

7. Anschlußgarnitur nach einem der Ansprüche 1 bis 5, dadurch gekennzeichnet, daß die Muffe (2) aus nichtmetallischen Werkstoffen besteht.
